# EUROPÄISCHE PATENTANMELDUNG

(11) **EP 0 838 604 A2**
(43) Veröffentlichungstag der Anmeldung: **29.04.1998**
(21) Anmeldenummer: 97109556.7
(22) Anmeldetag: 12.06.1997
(51) Int. Cl.: F16F 15/14

(54) **Drehelastische Kupplung**

(30) Priorität: 23.10.1996 DE 19643687
(71) Anmelder: Firma Carl Freudenberg, 69469 Weinheim (DE)
(72) Erfinder: Barsch, Peter, Dr., 79424 Auggen (DE); Gräber, Stefan, 79418 Schliengen (DE)

(57) **Zusammenfassung**

Drehelastische Kupplung, umfassend einen Nabenring (1), der von zumindest einer Riemenscheibe (2) mit radialem Abstand konzentrisch umschlossen ist, wobei in dem durch den Abstand gebildeten Spalt (3) ein als Lager ausgebildeter Tragring (4) und ein erster Federkörper (5) angeordnet sind. Der Tragring (4) besteht aus einem selbstschmierenden, metallischen Werkstoff und berührt Riemenscheibe (2) unmittelbar anliegend und relativ verdrehbar.

## Beschreibung

### Technisches Gebiet

Die Erfindung betrifft eine drehelastische Kupplung, umfassend einen Nabenring, der von zumindest einer Riemenscheibe mit radialem Abstand konzentrisch umschlossen ist, wobei in dem durch den Abstand gebildeten Spalt ein als Lager ausgebildeter Tragring und ein erster Federkörper angeordnet sind.

### Stand der Technik

Eine solche Kupplung ist aus der DE 44 43 691 C1 bekannt. Der Nabenring und die Riemenscheibe bestehen jeweils aus einem metallischen Werkstoff und sind durch einen als Gleitlager ausgebildeten Tragring aufeinander abgestützt. Das Gleitlager besteht dabei aus Sinterbronze oder einem polymerem Werkstoff, beispielsweise PTFE, das für die Herstellung von Gleitlagern gebräuchlich ist. Ein derartiges Gleitlager ist sehr verschleißarm.

### Darstellung der Erfindung

Der Erfindung liegt die Aufgabe Zugrunde, eine Kupplung der eingangs genannten Art derart weiterzuentwickeln, daß eine gute Abstützung der Riemenscheibe auf dem Tragring auch dann gegeben ist, wenn die Teile unmittelbar aufeinander abgestützt sind.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der Tragring aus einem selbstschmierenden, metallischen Werkstoff besteht und die Riemenscheibe unmittelbar anliegend und relativ verdrehbar berührt. Hierbei ist von Vorteil, daß es zur Abstützung von Tragring und Riemenscheibe aufeinander eines separat erzeugten und zu montierenden Gleitlagers nicht bedarf. Durch den teilearmen Aufbau ist die erfindungsgemäße drehelastische Kupplung in fertigungstechnischer und wirtschaftlicher Hinsicht einfach und kostengünstig herstellbar.

Bevorzugt besteht der Tragring aus einem Sintermetall. Hierbei ist von Vorteil, daß der Tragring durch eine geeignete Werkstoffauswahl in ausgezeichneter Weise an die jeweiligen Gegebenheiten des Anwendungsfalles anzupassen ist. Weitere Vorteile von Sinterwerkstoffen gegenüber herkömmlichen Materialien sind die guten Gleiteigenschaften durch gleichmäßig verteilte Poren, deren Volumen gezielt einstellbar ist sowie der Möglichkeit, beim Sintern eine, dem Grundwerkstoff unterschiedliche Lagerschicht aufzubringen.

Ferner ist von Vorteil, daß aus einem Sintermetall hergestellte Tragringe ohne Nachbearbeitung eine ausgezeichnete Maßhaltigkeit aufweisen. Eine Bearbeitung im Anschluß an die Herstellung des Tragrings aus Sintermetall ist daher nicht erforderlich. Die herstellungbedingte Oberfläche des Tragrings ist als Lauffläche zur Abstützung der Riemenscheibe einwandfrei geeignet.

Der Tragring besteht bevorzugt aus Fe-Sintermetall mit einer Porosität von 80 - 98 %. Damit ist ausreichende Festigkeit und auch die Aufnahme eines Gleitmittels in gleicher Weise gewährleistet.

Der Tragring kann zumindest jeweils eine Axial- und eine Radialführungsfläche für die Riemenscheibe aufweisen. Dadurch ist der Torsionsschwingungsdämpfer in der Lage, axiale und radiale Belastungen, die auf die Riemenscheibe wirken, aufzunehmen. Durch die einfache Formgebung eines aus einem Sintermetall bestehenden Tragrings sind separat erzeugte Axial- und/oder Radiallager sowie deren Montage in dem Torsionsschwingungsdämpfer nicht erforderlich.

Der Tragring kann beispielsweise einen im wesentlichen doppel-T-förmigen Querschnitt aufweisen. Hierbei ist von Vorteil, daß der Tragring auch dann eine ausgezeichnete Abstützung der Riemenscheibe auf dem Nabenring gewährleistet, wenn die Riemenscheibe erheblichen Axial- und/oder Radialbelastungen ausgesetzt ist. Durch die ausgezeichnete Festigkeit eines derart ausgebildeten Tragrings weist die drehelastische Kupplung weitgehend unabhängig von den aufgebrachten Belastungen auf die Riemenscheibe einen ausgezeichneten Rundlauf auf.

Die Riemenscheibe und der Tragring berühren einander relativ verdrehbar. Hierbei ist von Vorteil, daß der erste Federkörper ausschließlich zum Entkoppeln der Motor-Torsions ungleichförmigkeit und- Schwingungen vorgesehen ist und nicht zur Abstützung axialer und/oder radialer Lasten, die durch die Riemenscheibe selbst oder Belastungen auf diese erzeugt werden. Der Werkstoff des erste Federelements kann ohne Rücksicht auf seine Tragfähigkeit derart ausgewählt werden, daß eine möglichst optimale Entkopplung der Riemenscheibe sichergestellt ist. Dazu ist es ebenfalls erforderlich, daß eine Verdrehung der Riemenscheibe und des Tragrings relativ zueinander möglichst reibungsarm erfolgt. Eine entkoppelte Riemenscheibe mit integriertem Torsionsschwingungsdämpfer wird bevorzugt in Kraftfahrzeugen eingesetzt, um Kurbelwellenschwingungen zu reduzieren und eine Erregung des Riementriebs durch Schwingungen der Kurbelwelle bzw. den Ungleichförmigkeitsgrad des Verbrennungsmotors zu verhindern.

Der erster Federkörper besteht aus elastomerem Werkstoff und ist mit der Riemenscheibe haftend verbunden. Die haftende Verbindung wird beispielsweise durch eine Vulkanisation der Bauteile miteinander bewirkt. Bevorzugt weist der erste Federkörper eine Härte Shore A von 40 bis 60 auf.

Zur Erzeugung einer entkoppelten Riemenscheibe mit guten Gebrauchseigenschaften ist es vorgesehen, daß in radialer Richtung zwischen dem Nabenring und der Riemenscheibe ein Zwischenring angeordnet ist, daß der Naben- und der Zwischenring durch einen zweiten Federkörper aus elastomerem Werkstoff miteinander verbunden sind und daß der erste und der zweite Federkörper in einer funktionstechnischen Reihenschaltung angeordnet sind. Der zweiten Federkörper ist bevorzugt als Gummispur zwischen dem Nabenring und dem Zwischenring ausgebildet, die sich in axialer Richtung entlang der gesamten axialen Erstreckung von Nabenring und/oder Zwischenring erstrecken kann und weist eine vergleichsweise geringe radiale Höhe auf. Der zweite Federkörper ist vorgesehen, um die Torsionsschwingungen in der Kurbelwelle zu dämpfen.

Der erste und der zweite Federkörper weisen bevorzugt voneinander abweichende Federeigenschaft auf, wobei der erste und der zweite Federkörper aus voneinander abweichenden Werkstoffen bestehen und/oder eine voneinander abweichende Geometrie haben. Eine Abstimmung an das jeweilige Schwingungsverhalten der Verbennungskraftmaschine ist dadurch einfach möglich.

Der Nabenring, der Zwischenring und die Riemenscheibe bestehen aus einem zähharten, bevorzugt einem metallischen Werkstoff.

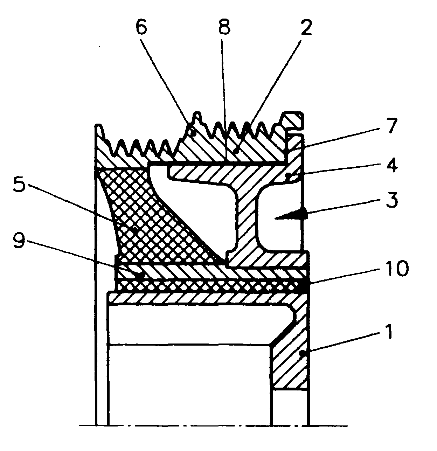

### Kurzbeschreibung der Zeichnung

Ein Ausführungsbeispiel der erfindungsgemäßen drehelastischen Kupplung wird nachfolgend anhand der Zeichnung näher erläutert.

### Ausführung der Erfindung

In der Zeichnung ist ein Ausführungsbeispiel einer drehelastischen Kupplung mit integriertem Torsionsschwingungsdämpfer in schematischer Darstellung gezeigt. Der Torsionsschwingungsdämpfer umfaßt eine als Kupplungselement ausgebildete, entkoppelte Riemenscheibe 2, die mit dem ersten Federkörper 5 verbunden ist. Anregungen des Riementriebs 6 durch Schwingungen der Kurbelwelle bzw. den Ungleichförmigkeitsgrad der Verbrennungskraftmaschine werden durch den gezeigten Torsionsschwingungsdämpfer weitgehend verhindert.

Der Torsionsschwingungsdämpfer besteht aus einem Nabenring 1, der in radialer Richtung außenseitig vom zweiten Federkörper 10 umschlossen ist, der seinerseits an der Innenumfangsfläche des Zwischenrings 9 anvulkanisiert ist. Die axiale Erstreckung des Nabenrings 1, des zweiten Federkörpers 10 und des Zwischenrings 9 ist von übereinstimmender Größe. Innerhalb des Spalts 3 zwischen dem Zwischenring 9 und der Riemenscheibe 2 ist der erster Federkörper 5 angeordnet, der den Zwischenring 9 unmittelbar anliegend berührt und mit der Riemenscheibe 2 adhäsiv verbunden ist. In axialer Richtung benachbart zum ersten Federkörper 5 ist innerhalb des Spalts 3 der Tragring 4 angeordnet, der aus einem Sintermetall besteht. Der Tragring 4 ist in radialer Richtung innen auf den Außenumfang des Zwischenrings 9 aufgepreßt und dadurch mit diesem relativ unverdrehbar verbunden. Der Tragring 4 erzeugt zusammen mit dem Zwischenring 9 das für die Dämpfung der Kurbelwellenschwingungen notwendige Massenträgheitsmoment. Auf der dem Zwischenring 9 abgewandten Seite ist der Tragring 4 mit einer Radialführung 8 versehen und mit einer Axialführung 7, die unter Vorspannung an der Riemenscheibe 2 anliegt. Dadurch, daß der Tragring 4 aus einem Sintermetall besteht, sind die Gleiteigenschaften im Bereich der Berührungsflächen von Tragring 4 und Riemenscheibe 2 sowie deren Relativverdrehbarkeit zueinander sehr gut.

Die Riemenscheibe 2 ist einstückig ausgebildet und zur Aufnahme von im allgemeinen zumindest einem, in diesem Ausführungsbeispiel zur Aufnahme von zwei hier nicht dargestellten Riemen vorgesehen.

## Patentansprüche

1. Drehelastische Kupplung, umfassend einen Nabenring, der von zumindest einer Riemenscheibe mit radialem Abstand konzentrisch umschlossen ist, wobei in dem durch den Abstand gebildeten Spalt ein als Lager ausgebildeter Tragring und ein erster Federkörper angeordnet sind, dadurch gekennzeichnet, daß der Tragring (4) aus einem selbstschmierenden, metallischen Werkstoff besteht und die Riemenscheibe (2) unmittelbar anliegend und relativ verdrehbar berührt.

2. Kupplung nach Anspruch 1, dadurch gekennzeichnet, daß der Tragring (4) aus einem Sintermetall besteht.

3. Kupplung nach einem der Ansprüche 1 bis 2, dadurch gekennzeichnet, daß der Tragring (4) zumindest jeweils eine Axial- (7) und eine Radialführungsfläche (8) für die Riemenscheibe (2) aufweist.

4. Kupplung nach einem der Ansprüche 1 bis 3, dadurch gekennzeichnet, daß der Tragring (4) einen im wesentlichen doppel-T-förmigen Querschnitt aufweist.

5. Kupplung nach einem der Ansprüche 1 bis 4, dadurch gekennzeichnet, daß der erster Federkörper (5) aus elastomerem Werkstoff besteht und mit der Riemenscheibe (2) haftend verbunden ist.

6. Kupplung nach einem der Ansprüche 1 bis 5, dadurch gekennzeichnet, daß in radialer Richtung zwischen dem Nabenring (1) und der Riemenscheibe (2) ein Zwischenring (9) angeordnet ist, daß der Naben- (1) und der Zwischenring (9) durch einen zweiten Federkörper (9) aus elastomerem Werkstoff miteinander verbunden sind, daß der Zwischenring (9) und der Tragring (4) die Schwungmasse für einen Torsionsschwingungsdämpfer bilden und daß der erste (5) und der zweite Federkörper (10) in einer funktionstechnischen Reihenschaltung angeordnet sind.

7. Kupplung nach einem der Ansprüche 1 bis 6, dadurch gekennzeichnet, daß der erste (5) und der zweite Federkörper (10) voneinander abweichende Federeigenschaften aufweisen.
